# EUROPEAN PATENT APPLICATION

(11) **EP 1 942 542 A1**
(43) Date of publication of application: **09.07.2008**
(21) Application number: 06796784.4
(22) Date of filing: 25.08.2006
(51) Int. Cl.: H01M 8/04, H01M 8/10

(54) **FUEL CELL**

(30) Priority: 30.08.2005 JP 2005249410
(71) Applicant: Kabushiki Kaisha Toshiba, Minato-ku, Tokyo 105-8001 (JP)
(72) Inventor: HASEBE, Hiroyuki c/o Toshiba Corporation, Tokyo 105-8001 (JP); TAKAHASHI, Kenichi c/o Toshiba Corporation, Tokyo 105-8001 (JP); KAWAMURA, Koichi c/o Toshiba Corporation, Tokyo 105-8001 (JP); YASUI, Hideaki c/o Toshiba Corporation, Tokyo 105-8001 (JP)
(74) Representative: Henkel, Feiler & Hänzel
(86) International application number: PCT/JP2006/316711
(87) International publication number: WO 2007/026611

(57) **Abstract**

A fuel cell is **characterized by** including a cartridge 3 having a fuel outlet 2 for ejecting a liquid fuel 1 held in the cartridge 3 and a fuel cell main body 5 having a fuel receiving hole 4 for receiving the liquid fuel 1 from the cartridge 3, the fuel cell having a configuration in which the fuel outlet 2 of the cartridge 3 is detachably connected to the fuel receiving hole 4 of the fuel cell main body 5, wherein the cartridge 3 includes a first valve body 6 for opening and closing the fuel outlet 2 and a first elastic member 7 for applying an elastic force to the first valve body 6 so as to normally close the fuel outlet 2, the fuel cell main body 5 includes a second valve body 8 for opening and closing the fuel receiving hole 4 and a second elastic member 9 for applying an elastic force to the second valve body 8 so as to normally close the fuel receiving hole 4, and in the configuration, the elastic force of the elastic member 7 is specified to be larger than the elastic force of the second elastic member 9, when the fuel outlet 2 of the cartridge 3 is attached to the fuel receiving hole 4 of the fuel cell main body 5 by a pressing force, the first valve body 6 of the cartridge 3 is butted against the second valve body 8, the second valve body 8 is pushed down against the elastic force of the second elastic member 9 so as to maintain the state of the fuel receiving hole 4 being opened, and a pressing force larger than the elastic force of the second elastic member 8 is applied to the cartridge 3 so as to push up the first valve body 6 against the elastic force of the first elastic member 7 through reaction of the second valve body 8 and, thereby, open the fuel outlet 2 of the cartridge 3. According to the fuel cell having the configuration, no leakage of liquid fuel occurs during fuel filling from the cartridge into the fuel cell main body and the liquid fuel can be filled in reliably with a simple configuration.

## Description

### Technical Field

The present invention relates to a fuel cell. In particular, the present invention relates to a fuel cell including a cartridge holding a liquid fuel and a fuel cell main body for receiving the liquid fuel from the above-described cartridge appropriately, the fuel cell having a configuration in which the above-described cartridge is detachably connected to the fuel cell main body, wherein no leakage of liquid fuel occurs during fuel filling and the liquid fuel can be filled in reliably with a simple configuration.

### Background Art

In recent years, various types of electronic equipment, e.g., personal computers, cellular phones, and portable acoustic equipment, have been miniaturized as the semiconductor technology has been developed, and use of fuel cells as power sources of the small equipment has been attempted. The fuel cell can generate electricity by supplying merely a fuel and air serving as an oxidizer and has an advantage that the electricity can be generated for a long time by supplying substantially merely the fuel. Therefore, if the miniaturization is realized, it can be said that the fuel cell is an extremely advantageous system serving as an operating electric power sources for the portable electronic equipments. In particular, DMFC (direct methanol fuel cell) can be miniaturized because methanol having a high energy density is used as a fuel, the current can be taken out directly from methanol on an electrode catalyst, and no reformer is required. Therefore, DMFC is a promising electric power source for small equipment because the handling of fuel is easy as compared with that of a cell in which a hydrogen gas is used as a fuel.

Regarding the method for supplying a fuel to an electricity generation portion in the above-described DMFC, for example, a gas supply type DMFC, in which a liquid fuel is vaporized and the vaporized fuel is fed into a fuel cell with a blower or the like and a liquid supply type DMFC, in which a liquid fuel is fed directly into a fuel cell with a pump or the like, are known.

Examples of previously known fuel cell apparatuses composed of a fuel cartridge and a fuel cell include a fuel cell apparatus shown in Patent Document 1. This fuel cell apparatus is configured to include a direct type methanol fuel cell portion in which electricity is generated by chemically reacting a methanol aqueous solution and air through an electrolyte film, a cartridge mounting portion to which a fuel cartridge holding the methanol aqueous solution is mounted in such a way as to be detachably connected, a liquid supply pump for supplying the methanol aqueous solution held in the fuel cartridge mounted on the cartridge mounting portion to the above-described direct type methanol fuel cell portion, and a recognition device for recognizing the mounting of the above-described fuel cartridge on the above-described cartridge mounting portion and the mounting on the electronic apparatus to be supplied with the electricity generated by the fuel cell apparatus.

Methanol serving as a liquid fuel is held in the fuel cartridge and is appropriately filled into a fuel tank integrally incorporated in the fuel cell main body. For example, in the case where the fuel is injected into the fuel tank manually, the trunk portion of the fuel cartridge is pressed while an injection hole of the fuel cartridge, which is formed from a resin material, e.g., PP, or glass and which holds methanol, is attached to a receiving hole of the fuel tank, and methanol in the inside under pressure is injected into the fuel tank.

Patent Document 1: Japanese Unexamined Patent Application Publication No. 2004-71262

However, in many cases where the fuel cartridge used for the above-described known fuel cell is attached to the receiving hole of the fuel tank of the fuel cell main body with a screw, the fuel cartridge side surface is pressed at an incomplete stage before the screw is completely tightened and, thereby, the fuel is pushed out. Consequently, there is a disadvantage that the leakage of liquid easily occurs in the attachment portion. Furthermore, in order to tighten completely, it is required that the screw on the fuel tank side and the screw on the cartridge side are fitted to each other accurately and screwed. Therefore, there is also a disadvantage that the attachment operation becomes complicated. In some cases, screwing is conducted forcibly in the state in which the centers of the two screws are not fitted and, as a result, a screw thread is impaired so that the attachment becomes difficult thereafter. In any case where the attachment is conducted with the screw, the working operation of the screw portion is complicated and the working cost increases. Consequently, a simpler, inexpensive attachment and detachment structure has been desired.

In particular, in the operation of fuel injection, the cartridge is pressed against the fuel cell main body side and is attached to the fuel- receiving hole while the cartridge, which holds the fuel and which is molded from a soft resin material, is grasped firmly. Therefore, the pressure of the liquid fuel in the cartridge increases at the stage before the injection hole of the cartridge and the receiving hole of the fuel cell main body are connected to each other completely. If the injection hole of the cartridge is opened at this stage while the receiving hole on the fuel cell main body side is not opened, the liquid fuel is ejected by the internal pressure from the connection portion of the cartridge so as to scatter the flammable liquid fuel to the surroundings, and a problem occurs in that the safety is reduced.

### Disclosure of Invention

The present invention has been made in consideration of the above-described circumstances. Accordingly, it is an object of the present invention to provide a fuel cell including a cartridge holding a liquid fuel and a fuel cell main body for receiving the liquid fuel from the above-described cartridge appropriately, the fuel cell having a configuration in which the above-described cartridge is attached to and detached from the fuel cell main body at will, wherein no leakage of liquid fuel occurs during fuel filling and the liquid fuel can be filled in reliably with a simple configuration.

In order to achieve the above-described objects, the inventors of the present invention produced ideas on various attachment and detachment structures of the injection hole of the cartridge and the receiving hole of the fuel cell main body and studied influences of the individual attachment and detachment structures exerted on the completeness of the attachment state, the easiness in occurrence of fuel leakage, and the simplicity of structure through comparisons based on the experiments.

As a result, the following findings have been obtained. In particular, in the configuration in which the receiving hole on the fuel cell side was opened at first and the injection hole on the cartridge side was not opened until the receiving hole on the fuel cell main body side and the injection hole on the cartridge side were coupled completely, no leakage of the liquid fuel occurred at the connection portion between the cartridge and the fuel cell main body, and a fuel cell, which had a simple configuration and which was able to be reliably filled with the liquid fuel, was obtained for the first time because the injection hole on the cartridge side was opened after the receiving hole on the fuel cell main body side was opened and, therefore, the liquid fuel was filled in smoothly while a path for receiving the pressurized liquid fuel in the cartridge had been ensured. The present invention has been completed on the basis of the above-described findings.

A fuel cell according to the present invention is characterized by including a cartridge having a fuel outlet for ejecting a liquid fuel held in the cartridge and a fuel cell main body having a fuel receiving hole for receiving the liquid fuel from the above-described cartridge, the fuel cell having a configuration in which the fuel outlet of the above-described cartridge is detachably connected to the fuel receiving hole of the fuel cell main body, wherein the above-described cartridge includes a first valve body for opening and closing the fuel outlet and a first elastic member for applying an elastic force to the first valve body so as to normally close the fuel outlet, the above-described fuel cell main body includes a second valve body for opening and closing the fuel receiving hole and a second elastic member for applying an elastic force to the second valve body so as to normally close the fuel receiving hole, and in the configuration, the elastic force of the above-described first elastic member is specified to be larger than the elastic force of the second elastic member, when the fuel outlet of the above-described cartridge is attached to the fuel receiving hole of the fuel cell main body by a pressing force, the first valve body of the cartridge is butted against the second valve body, the second valve body is pushed down against the elastic force of the second elastic member so as to maintain the state of the fuel receiving hole being opened, and a pressing force larger than the elastic force of the second elastic member is applied to the cartridge so as to push up the first valve body against the elastic force of the first elastic member through reaction of the second valve body and, thereby, open the fuel outlet of the cartridge.

Regarding the above-described fuel cell, in the case where the fuel outlet of the cartridge is attached to the fuel receiving hole of the fuel cell main body by a pressing force, since the elastic force of the first elastic member is specified to be larger than the elastic force of the second elastic member, the first valve body of the cartridge is butted against the second valve body and the second valve body is pushed down against the elastic force of the second elastic member so as to open the fuel receiving hole. The second elastic member is compressed until a minimum height is reached. Thereafter, when a pressing force larger than the elastic force of the second elastic member is applied to the cartridge, the first valve body is pushed up against the elastic force of the first elastic member through reaction of the second valve body and, thereby, the fuel outlet is opened.

Therefore, according to the above-described fuel cell, since the fuel injection hole on the cartridge side is opened after the fuel receiving hole on the fuel cell main body side is opened, the liquid fuel is filled in smoothly while a path for receiving the pressurized liquid fuel in the cartridge has been ensured. Consequently, no leakage of the liquid fuel occurs at the connection portion between the cartridge and the fuel cell main body, and a fuel cell which has a simple configuration and which can be safely filled with the liquid fuel is obtained.

In the above-described fuel cell, preferably, the above-described fuel outlet is disposed in a fuel injection cylinder for containing the first valve body and the first elastic member, the above-described fuel receiving hole is disposed in a fuel receiving cylinder for containing the second valve body and the second elastic member, and a guide cylinder, into which the above-described fuel injection cylinder is inserted and which guides the fuel injection cylinder to a predetermined position in an axial direction, is disposed integrally with the above-described fuel receiving cylinder.

The fuel injection cylinder can be accurately guided to the predetermined position in the axial direction when the guide cylinder, into which the above-described fuel injection cylinder is inserted, is disposed concentrically with the fuel injection cylinder. Furthermore, an enclosed space is formed in the inside of the fuel injection cylinder and the fuel receiving cylinder at the stage in which the fuel injection cylinder is inserted into the guide cylinder. Therefore, even when the first valve body or the second valve body is opened in this state, there is no possibility of spouting of the contents (liquid fuel) pressurized by the internal pressure to the outside. Consequently, the fuel injection operation can be conducted safely.

In the above-described fuel cell, it is preferable that each of the above-described first elastic member and the second elastic member is composed of a coil spring. According to the first elastic member and the second elastic member composed of the coil springs, the elastic force and the amount of expansion or contraction of the elastic member are arbitrarily and easily set by selecting the type of material, the wire diameter, the number of winding, the spring constant, and the like.

In the above-described fuel cell, it is also preferable that a first sealant (first sealing member) is disposed to a portion between the above-described fuel injection cylinder and the first valve body. The fluid-tightness between the fuel injection cylinder and the first valve body can be maintained by disposing the above-described first sealant, and the state of the fuel injection hole being closed can be maintained more reliably.

In the above-described fuel cell, it is also preferable that a second sealant is disposed between the above-described fuel receiving cylinder and the second valve body. The fluid-tightness between the fuel receiving cylinder and the second valve body can be maintained by disposing the above-described second sealant, and the state of the fuel receiving hole being closed can be maintained more reliably.

In the above-described fuel cell, it is also preferable that a third sealant for maintaining the fluid-tightness of the above-described guide cylinder and the fuel injection cylinder when the fuel injection cylinder is inserted into the guide cylinder is disposed in the inside of the guide cylinder.

When the fuel injection cylinder is inserted into the guide cylinder completely, the gap between the two cylinders can be sealed by disposing the above-described third sealant in the inside of the guide cylinder, and fuel leakage from the gap can be prevented completely.

It is favorable that a metal material, for example, a spring steel having a Hv hardness of 55 or more, a special spring steel, e.g., a Si-Mn steel, a Cr steel, a Cr-Mn steel, a Si-Mn-Cr steel, or a Cr-V steel, or a material specified as SUP by JIS (Japanese Industrial Standard) is used as the material for constituting the above-described elastic member in order to actuate the first valve body or the second valve body with a predetermined elastic force and open or close the fuel outlet or the fuel receiving hole.

It is also preferable that the above-described elastic member is formed by working the above-described metal material into a predetermined shape and, thereafter, conducting a heat treatment for quenching and tempering in order to improve the durability. It is also preferable that a surface treatment, in which a plating layer, e.g., a gold plating layer, or a resin coating layer is formed on a metal material surface, is conducted in order to improve the corrosion resistance to a liquid fuel, e.g., methanol.

A rubber material having an appropriate elastic force can also be used as the above-described elastic member. In the case where the rubber material is used, a structure having functions of an elastic member, a valve body and, furthermore, a sealant in combination can be formed by integral molding so as to have a high industrial value.

A thermoplastic resin for constituting the above-described cartridge container is not specifically limited. One type of material, e.g., polyethylene (PE), polypropylene (PP), polystyrene (PS), polyethylene terephthalate (PET), a vinyl acetate resin, a vinyl acetal resin, a styrol resin, an acrylic resin, a fluororesin, a polyamide resin, an acetal resin, polycarbonate, a polytetrafluoroethylene resin, a vinyl chloride resin, an ABS resin, or fiber rope based plastic, or a composite formed by combining at least two types thereof can be used favorably. In particular, polyethylene terephthalate (PET) is more favorable from the viewpoint of the mechanical strength to endure the repeated pressing force, the transparency required for managing or controlling the fuel, and the corrosion resistance against to the fuel. Furthermore, polyethylene (PE), a polytetrafluoroethylene resin, and the like are favorable as a crystalline resin which is easily crystallized so as to increase the bonding strength between molecules.

### [Effects of the Invention]

Regarding the fuel cell according to the present invention, since the fuel outlet on the cartridge side is opened after the fuel receiving hole on the fuel cell main body side is opened, the liquid fuel is filled in smoothly while a path for receiving the pressurized liquid fuel in the cartridge has been ensured. Consequently, no leakage of the liquid fuel occurs at the connection portion between the cartridge and the fuel cell main body, and a fuel cell which has a simple configuration and which can be safely filled with the liquid fuel is obtained.

### Best Mode for Carrying Out the Invention

An embodiment of the fuel cell according to the present invention will be more specifically described below with reference to the following example and the attached drawings.

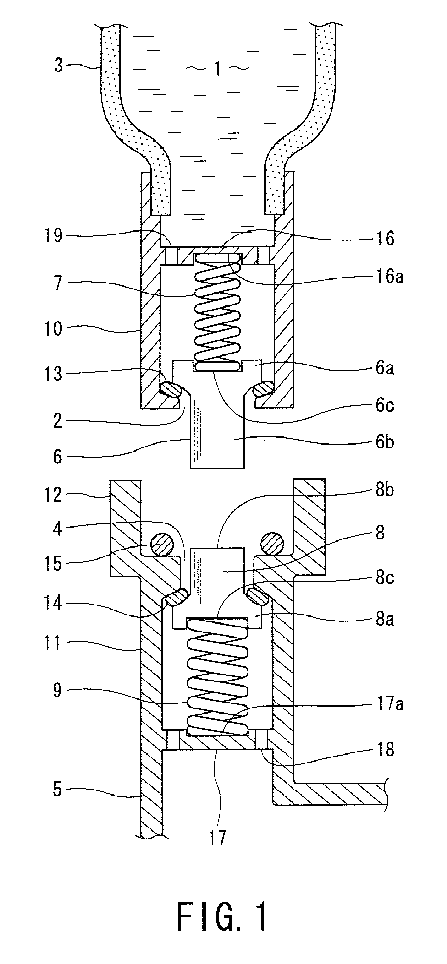

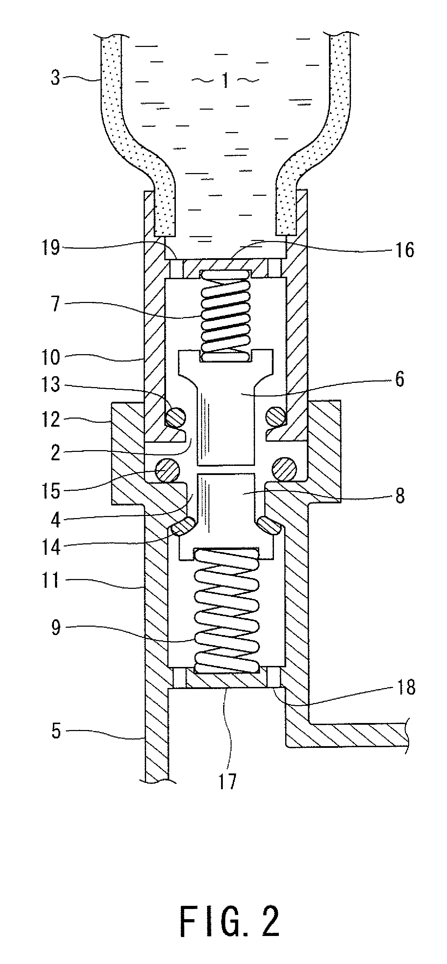

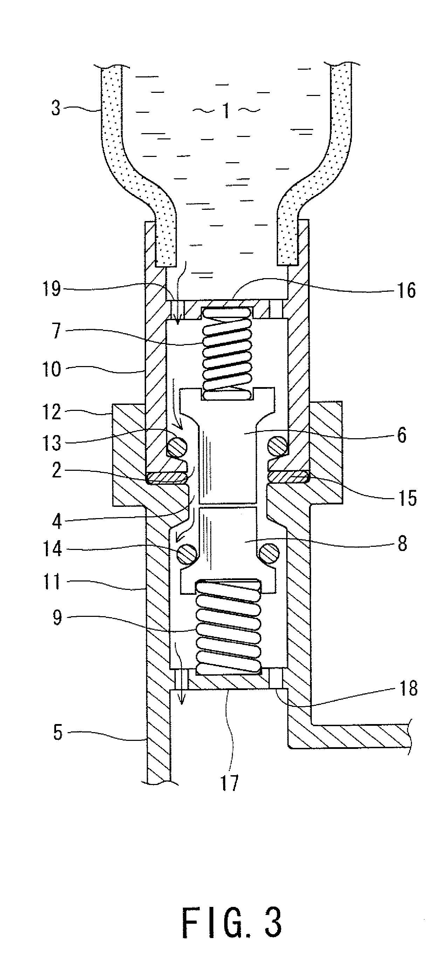

Fig. 1 to Fig. 3 show an example of a fuel cell according to the present invention, and show a configuration of the fuel cell including respective valve bodies for opening and closing a fuel outlet portion of a cartridge and a fuel receiving portion of a fuel cell main body. Specifically, Fig. 1 is a sectional view showing the configurations of the fuel outlet of the cartridge filled with a liquid fuel and the fuel receiving hole of the fuel cell main body at the stage in which they are not attached to each other. Fig. 2 is a sectional view showing the state in which a second valve body on the fuel cell main body side is moved down so as to open the fuel receiving hole. Fig. 3 is a sectional view showing the state in which both the fuel outlet of the cartridge and the fuel receiving hole of the fuel cell main body are opened.

That is, the fuel cell according to the present example is characterized by including a cartridge 3 having a fuel outlet 2 for ejecting a liquid fuel 1 held in the cartridge 3 and a fuel cell main body 5 having a fuel receiving hole 4 for receiving the liquid fuel 1 from the cartridge 3, the fuel cell having a configuration in which the fuel outlet 2 of the above-described cartridge 3 is detachably connected to the fuel receiving hole 4 of the fuel cell main body 5, wherein the above-described cartridge 3 includes a first valve body 6 for opening and closing the fuel outlet 2 and a first elastic member 7 for applying an elastic force to the first valve body 6 so as to normally close the fuel outlet 2, the above-described fuel cell main body 5 includes a second valve body 8 for opening and closing the fuel receiving hole 4 and a second elastic member 9 for applying an elastic force to the second valve body so as to normally close the fuel receiving hole 4, and in the configuration, the elastic force of the above-described first elastic member 7 is specified to be larger than the elastic force of the second elastic member 9, when the fuel outlet 2 of the above-described cartridge 3 is attached to the fuel receiving hole 4 of the fuel cell main body 5 by a pressing force, the first valve body 6 of the cartridge 3 is butted against the second valve body 8, the second valve body 8 is pushed down against the elastic force of the second elastic member 9 so as to maintain the state of the fuel receiving hole 4 being opened, and a pressing force larger than the elastic force of the second elastic member 9 is applied to the cartridge 3 so as to push up the first valve body 6 against the elastic force of the first elastic member 7 through reaction of the second valve body 8 and, thereby, open the fuel outlet 2 of the cartridge 3.

In the above-described fuel cell, the above-described fuel outlet 2 is disposed in a fuel injection cylinder 10 for containing the first valve body 6 and the first elastic member 7, while the above-described fuel receiving hole 4 is disposed in a fuel receiving cylinder 11 for containing the second valve body 8 and the second elastic member 9, and a guide cylinder 12, into which the above-described fuel injection cylinder 10 is inserted and which guides the fuel injection cylinder 10 to a predetermined position in an axial direction, is disposed integrally with the above-described fuel receiving cylinder 11.

In the above-described fuel cell, each of the above-described first elastic member and the second elastic member is composed of a coil spring. Further, a first sealant 13 is disposed between the above-described fuel injection cylinder 10 and the first valve body 6. On the other hand, a second sealant 14 is disposed between the above-described fuel receiving cylinder 11 and the second valve body 8. Furthermore, a third sealant 15 for maintaining the fluid-tightness of the guide cylinder 12 and the fuel injection cylinder 10 when the fuel injection cylinder 10 is inserted into the guide cylinder 12 is disposed in the inside of the guide cylinder 12.

Furthermore, the first valve body 6 attached on the cartridge 3 side is composed of a head portion 6a, which is reciprocated in the fuel injection cylinder 10 in the axial direction while being loosely fit in the fuel injection cylinder 10, and a protrusion 6b, which is reciprocated in the fuel outlet 2 in the axial direction while being loosely fit in the fuel outlet 2, the fuel outlet 2 being disposed at an end portion of the above-described fuel injection cylinder 10. The above-described head portion 6a includes a concave portion 6c for fitting and fixing one end (a lower end shown in Fig. 1) of the coil spring serving as the first elastic member 7.

In the inside of the fuel injection cylinder 10, a spring seat 16 including a concave portion 16a for fitting and fixing the other end (an upper end shown in Fig. 1) of the first elastic member 7 is disposed so as to oppose to the first valve body 6. A plurality of flow holes 19 for flowing the liquid fuel 1 are disposed in the peripheral portion of the spring seat 16. A coil spring serving as the first elastic member 7 is disposed between the spring seat 16 and the first valve body 6. The elastic force of the first elastic member 7 energizes the first valve body 6 in the direction of the fuel outlet 2. Therefore, cooperation with the sealing action of the first sealant 13, the fuel outlet 2 is normally closed.

On the other hand, the second valve body 8 attached to the fuel cell main body 5 side is composed of a head portion 8a, which is reciprocated in the fuel receiving cylinder 11 in the axial direction while being loosely fit in the fuel receiving cylinder 11, and a protrusion 8b, which is reciprocated in the fuel receiving hole 4 in the axial direction while being loosely fit in the fuel receiving hole 4, the fuel receiving hole 4 being disposed at an end portion of the above-described fuel receiving cylinder 11. The above-described head portion 8a includes a concave portion 8c for fitting and fixing one end (an upper end shown in Fig. 1) of the coil spring serving as the second elastic member 9.

In the inside of the fuel receiving cylinder 11, a spring seat 17 including a concave portion 17a for fitting and fixing the other end (a lower end shown in Fig. 1) of the second elastic member 9 is disposed so as to oppose to the second valve body 8. A plurality of flow holes 18 for flowing the liquid fuel 1 are disposed in the peripheral portion of the spring seat 17. A coil spring serving as the second elastic member 9 is disposed between the spring seat 17 and the second valve body 8. The second elastic member 9 is formed from a spring material having a wire diameter smaller than that of the spring material constituting the first elastic member 7. Consequently, the elastic force of the second elastic member 9 is specified to be smaller than the elastic force of the first elastic member 7. The elastic force of the second elastic member 9 energizes the second valve body 8 in the direction of the fuel receiving hole 4. Therefore, cooperation with the sealing action of the second sealant 14, the fuel receiving hole 4 is normally closed.

In the fuel cell according to the present example having the above-described configuration, in the case where the fuel outlet 2 of the cartridge 3 is attached to the fuel receiving hole 4 of the fuel cell main body 5 by a pressing force, since the elastic force of the coil spring serving as the first elastic member 7 is specified to be larger than the elastic force of the coil spring serving as the second elastic member 9, the protrusion 6b of the first valve body 6 of the cartridge 3 is butted against the protrusion 8b of the second valve body 8, and the second valve body 8 is pushed down against the elastic force of the second elastic member 9 so as to open the fuel receiving hole 4 first, as shown in Fig. 2. The second elastic member 9 is compressed until a minimum height is reached.

Thereafter, when a pressing force larger than the elastic force of the second elastic member 9 is applied to the cartridge 3, the first valve body 6 is pushed up against the elastic force of the first elastic member 7 through reaction of the second valve body 8 and, thereby, the fuel outlet 2 on the cartridge 3 side is opened, as shown in Fig. 3.

Therefore, according to the above-described fuel cell, since the fuel outlet 2 formed to the cartridge 3 side is opened after the fuel receiving hole 4 on the fuel cell main body 5 side is opened, the liquid fuel from the cartridge 3 is allowed to smoothly flow into and fill a fuel tank or the like provided to the fuel cell main body 5 side while a flowing path for receiving the pressurized liquid fuel 1 in the cartridge 3 has been ensured, as indicated by arrows shown in Fig. 3. Consequently, no leakage of the liquid fuel 1 occurs at the connection portion between the cartridge 3 and the fuel cell main body 5, and a fuel cell which has a simple configuration and which can be filled reliably with the liquid fuel 1 is obtained.

In the above-described fuel cell, the above-described fuel outlet 2 is disposed in the fuel injection cylinder 10 for containing the first valve body 6 and the first elastic member 7. On the other hand, the above-described fuel receiving hole 4 is disposed in the fuel receiving cylinder 11 for containing the second valve body 8 and the second elastic member 9. Further, the guide cylinder 12, into which the above-described fuel injection cylinder 10 is inserted and which guides the fuel injection cylinder 10 to a predetermined position in an axial direction, is disposed concentrically with the above-described fuel receiving cylinder 11. Therefore, the fuel injection cylinder 10 can be accurately guided to the predetermined position in the axial direction relative to the fuel receiving cylinder 11.

Furthermore, when the fuel injection cylinder 10 is inserted into the guide cylinder 12, an enclosed space is formed in the inside of the fuel injection cylinder 10 and the fuel receiving cylinder 11. Therefore, even when the first valve body 6 or the second valve body 8 is opened in this state, there is no possibility of spouting out of the contents (liquid fuel) pressurized by the internal pressure to the outside. Consequently, the fuel injection operation can be conducted reliably.

In the above-described fuel cell, each of the above-described first elastic member 7 and the second elastic member 9 is composed of a coil spring. Therefore, the elastic force and the amount of expansion and contraction of each of the elastic member 7 and the elastic member 9 are easily and arbitrarily set by selecting appropriately the type of material, the wire diameter, the number of winding, the spring constant, and the like of the coil spring.

In the above-described fuel cell, a first sealant 13 is disposed to a portion between the above-described fuel injection cylinder 10 and the first valve body 6. Therefore, the fluid-tightness between the fuel injection cylinder 10 and the first valve body 6 can be maintained, and the state of the fuel outlet 2 being closed can be maintained more reliably, so that the leakage of the liquid fuel 1 can be prevented more reliably.

In the above-described fuel cell, a second sealant 14 is disposed between the above-described fuel receiving cylinder 11 and the second valve body 8. Therefore, the fluid-tightness between the fuel receiving cylinder 11 and the second valve body 8 can be maintained, so that the state of the fuel receiving hole 4 being closed can be maintained more reliably.

Further, in the above-described fuel cell, when the fuel injection cylinder 10 is inserted into the guide cylinder 12, a third sealant 15 for maintaining the fluid-tightness of the above-described guide cylinder 12 and the fuel injection cylinder 10 is disposed on an inner bottom portion of the guide cylinder 12. Therefore, when the fuel injection cylinder 10 is inserted into the guide cylinder 12 completely, the gap between the two cylinders can be sealed with fluid-tightness, and fuel leakage from the gap can be prevented more completely.

### Industrial Applicability

Regarding the fuel cell according to the present invention, since the fuel outlet formed to the cartridge side is opened after the fuel receiving hole on the fuel cell main body side is opened, the liquid fuel is filled in smoothly while a flowing path for receiving the pressurized liquid fuel in the cartridge has been ensured. Consequently, no leakage nor spouting- out of the liquid fuel occurs at the connection portion between the cartridge and the fuel cell main body, and a fuel cell which has a simple configuration and which can be filled reliably with the liquid fuel can be obtained.

### Brief Description of Drawings

Fig. 1 shows an example of a fuel cell according to the present invention and is a sectional view showing the configurations of a fuel outlet of a cartridge filled with a liquid fuel and a fuel receiving hole of a fuel cell main body at the stage in which they are not connected to each other.
Fig. 2 shows an example of the fuel cell shown in Fig. 1 and is a sectional view showing the state in which a second valve body formed to the fuel cell main body side is moved down so as to open the fuel receiving hole.
Fig. 3 shows an example of the fuel cell shown in Fig. 1 and is a sectional view showing the state in which both the fuel outlet of the cartridge and the fuel receiving hole of the fuel cell main body are opened.

## Claims

1. A fuel cell **characterized by** comprising a fuel cartridge having a fuel outlet for ejecting a liquid fuel held in the fuel cartridge and a fuel cell main body having a fuel receiving hole for receiving the liquid fuel from the cartridge, the fuel cell having a configuration in which the fuel outlet of the cartridge is detachably connected to the fuel receiving hole of the fuel cell main body,
wherein the cartridge includes a first valve body for opening and closing the fuel outlet and a first elastic member for applying an elastic force to the first valve body so as to normally close the fuel outlet,
the fuel cell main body includes a second valve body for opening and closing the fuel receiving hole and a second elastic member for applying an elastic force to the second valve body so as to normally close the fuel receiving hole,
and in the configuration, the elastic force of the first elastic member is specified to be larger than the elastic force of the second elastic member, when the fuel outlet of the cartridge is attached to the fuel receiving hole of the fuel cell main body by a pressing force, the first valve body of the cartridge is butted against the second valve body, the second valve body is pushed down against the elastic force of the second elastic member so as to maintain the state of the fuel receiving hole being opened, and a pressing force larger than the elastic force of the second elastic member is applied to the cartridge so as to push up the first valve body against the elastic force of the first elastic member through reaction of the second valve body and, thereby, open the fuel outlet of the cartridge.

2. The fuel cell according to Claim 1, **characterized in that** the fuel outlet is disposed in a fuel injection cylinder for containing the first valve body and the first elastic member, while the fuel receiving hole is disposed in a fuel receiving cylinder for containing the second valve body and the second elastic member, and a guide cylinder, into which the fuel injection cylinder is inserted and which guides the fuel injection cylinder to a predetermined position in an axial direction, is disposed integrally with the fuel receiving cylinder.

3. The fuel cell according to Claim 1, **characterized in that** at least one of the first elastic member and the second elastic member comprises a coil spring.

4. The fuel cell according to Claim 1, **characterized in that** a first sealant is disposed to a portion between the fuel injection cylinder and the first valve body.

5. The fuel cell according to Claim 1, **characterized in that** a second sealant is disposed to a portion between the fuel receiving cylinder and the second valve body.

6. The fuel cell according to Claim 2, **characterized in that** a third sealant for maintaining the fluid-tightness of the guide cylinder and the fuel injection cylinder, when the fuel injection cylinder is inserted into the guide cylinder, is disposed in the inside of the guide cylinder.

7. The fuel cell according to Claim 1, **characterized in that** at least one of the combination of the first elastic member and the first valve body and the combination of the second elastic member and the second valve body has an integrated structure.
